(19) Europäisches Patentamt
European Patent Office
Office européen des brevets

(11) **EP 2 903 223 A1**

(12) **EUROPEAN PATENT APPLICATION**
published in accordance with Art. 153(4) EPC

(43) Date of publication:
**05.08.2015 Bulletin 2015/32**

(51) Int Cl.:
**H04L 12/811** (2013.01)   **H04L 12/70** (2013.01)

(21) Application number: **13841733.2**

(86) International application number:
**PCT/JP2013/074443**

(22) Date of filing: **04.09.2013**

(87) International publication number:
**WO 2014/050547 (03.04.2014 Gazette 2014/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **27.09.2012   JP 2012214170**

(71) Applicant: **NEC Corporation**
**Tokyo 108-8001 (JP)**

(72) Inventor: **OZAWA, Kazunori**
**Tokyo 108-8001 (JP)**

(74) Representative: **Betten & Resch**
**Patent- und Rechtsanwälte PartGmbB**
**Theatinerstraße 8**
**(Fünf Höfe)**
**80333 München (DE)**

(54) **METHOD FOR TRANSMITTING IMAGE INFORMATION AND PACKET COMMUNICATION SYSTEM**

(57) Image information is transmitted from a transmission node as packets ($P_1$, $P_2$, ..., $P_m$) having data amounts ($q_1$, $q_2$, ..., $q_m$) that satisfy a relationship of $q_1 < q_2 < ... < q_m$. A reception node selects one of the packets based on delay times ($t_1$, $t_2$, ..., $t_m$) of the packets ($P_1$, $P_2$, ..., $P_m$).

FIG. 1

EP 2 903 223 A1

**Description**

Technical Field

This invention relates to transmission of image information through use of packet communication. In particular, this invention relates to transmission of image information through use of packet communication via a data communication network including, in at least a part thereof, a wireless communication section such as a mobile communication network.

Background Art

When image information is encoded and transmitted via a packet communication network, a packet delay occurs in some cases depending on a traffic congestion situation of the packet communication network. In particular, in a case of mobile communication such as mobile phone communication, its traffic congestion situation varies greatly depending on the locations of terminals and time.

Accordingly, when the traffic congestion situation is assumed before communication and a data rate corresponding to a bandwidth that is usable under the assumed congestion situation is determined in advance, and the image information is encoded and packetized to be transmitted at the determined data rate, a bit rate suitable for an actual traffic congestion situation is not necessarily achieved. When the actual traffic is more congested than the assumed one, the packet delay occurs and a real-time characteristic is thus deteriorated. In contrast, when the actual traffic is less congested than the assumed one, an opportunity for transmission at a high bit rate at which data could have been transmitted under this actual traffic situation without a delay is missed as a result.

In recent years, in corporations and the like in particular, the use of a "thin client" starts to become widespread in order to ensure high-level security. The thin client is a technology with which a virtual client on a server is operated from a terminal as if an actual terminal were operated and an application is run through use of the virtual client to generate screen information, and the screen information is transferred to the terminal to be displayed on a screen of the terminal. The thin client has an advantage in that because no data remains in a terminal, there is no fear of leakage of secret information, corporate information, and the like to the outside even if the terminal is lost.

Prior Art Document

Patent Document

Patent Document 1: JP-A-2011-193357

Summary of the Invention

Problem to be Solved by the Invention

In some thin client systems, through an operation performed on a terminal side, application software is run to generate a screen on a server side, and the generated screen is compressed and transferred to the terminal via a network, and then the terminal decodes the screen for display. In the thin client system of this type, a bit stream obtained by compressing and encoding the screen on the server side is transferred to the terminal via the network. At the time of executing such transfer, in a mobile network or the Internet in particular, a bandwidth is narrow, and further, an available bandwidth varies significantly with time depending on a data amount of other traffic flowing through the network. Accordingly, there has been a problem, which is as follows. Unless an amount of data to be transferred with the use of the thin client is suppressed to be an amount that is manageable by the available bandwidth or less, the data remains in the middle of the network, and owing to this, a delay time that elapses before the data arrives at the terminal becomes longer, a screen of the terminal freezes due to a delayed arrival of data for updating the screen, or a response speed of the terminal is decreased.

Patent Document 1 is given as a document in which the art related to this invention is disclosed. In Patent Document 1, there is disclosed a server machine configured to transmit, when transmitting first encoded image data to a client terminal and then transmitting second encoded image data having higher image quality than that of the first encoded image data to the client terminal, a piece of image data corresponding to a part different from image data constituting the first encoded image data, among a plurality of pieces of image data constituting the second encoded image data.

This invention has been made in view of the above-mentioned circumstances, and it is an object of this invention to transmit, when image information is transmitted via a packet communication network, the image information without causing a delay and as higher-quality data in response to a temporal variation of traffic of the packet communication network.

Means to Solve the Problem

In order to solve the above-mentioned problem, according to one aspect of this invention, there is provided a packet communication system, including: a first node; and a second node, the first node including: packet generation means for encoding image information to be transmitted to generate a plurality of packets $P_1$, $P_2$, ..., $P_m$, the plurality of packets $P_1$, $P_2$, ..., $P_m$ each corresponding to the image information and having data amounts $q_1$, $q_2$, ..., $q_m$, respectively, that satisfy a relationship of $q_1 < q_2 < ... < q_m$, where m is a natural number of 2 or more; and packet transmission means for transmitting the plurality of packets $P_1$, $P_2$, ..., $P_m$ to the second node, which is different from the first node, via a packet communication network, the second node including: delay time measurement means for measuring delay times $t_1$, $t_2$, ..., $t_m$ of the plurality of packets $P_1$, $P_2$, ..., $P_m$, respectively; and packet selection means for selecting any one of the plurality of packets $P_1$, $P_2$, ..., $P_m$ based on the delay times $t_1$, $t_2$, ..., $t_m$.

Further, according to another aspect of this invention,.there is provided a packet communication device, including: packet reception means for encoding image information to be transmitted to receive a plurality of packets $P_1$, $P_2$, ..., $P_m$ via a packet communication network, the plurality of packets $P_1$, $P_2$, ..., $P_m$ each corresponding to the image information and having data amounts $q_1$, $q_2$, ..., $q_m$, respectively, that satisfy a relationship of $q_1 < q_2 < ... < q_m$, where m is a natural number of 2 or more; delay time measurement means for measuring delay times $t_1$, $t_2$, ..., $t_m$ of the plurality of packets $P_1$, $P_2$, ..., $P_m$, respectively; and packet selection means for selecting any one of the plurality of packets $P_1$, $P_2$, ..., $P_m$ based on the delay times $t_1$, $t_2$, ..., $t_m$.

Further, according to still another aspect of this invention, there is provided a packet communication device, including: packet generation means for encoding image information to be transmitted to generate a plurality of packets $P_1$, $P_2$, ..., $P_m$, the plurality of packets $P_1$, $P_2$, ..., $P_m$ each corresponding to the image information and having data amounts $q_1$, $q_2$, ..., $q_m$, respectively, that satisfy a relationship of $q_1 < q_2 < ... < q_m$, where m is a natural number of 2 or more; and packet transmission means for transmitting the plurality of packets $P_1$, $P_2$, ..., $P_m$ to a destination packet communication device, which is different from the packet communication device, via a packet communication network. The destination packet communication device is configured to: measure delay times $t_1$, $t_2$, ..., $t_m$ of the plurality of packets $P_1$, $P_2$, ..., $P_m$, respectively; and select any one of the plurality of packets $P_1$, $P_2$, ..., $P_m$ based on the delay times $t_1$, $t_2$, ..., $t_m$.

Further, according to yet another aspect of this invention, there is provided a program for causing a computer to function as: packet reception means for encoding image information to be transmitted to receive a plurality of packets $P_1$, $P_2$, ..., $P_m$ via a packet communication network, the plurality of packets $P_1$, $P_2$, ..., $P_m$ each corresponding to the image information and having data amounts $q_1$, $q_2$, ..., $q_m$, respectively, that satisfy a relationship of $q_1 < q_2 < ... < q_m$, where m is a natural number of 2 or more; delay time measurement means for measuring delay times $t_1$, $t_2$, ..., $t_m$ of the plurality of packets $P_1$, $P_2$, ..., $P_m$, respectively; and packet selection means for selecting any one of the plurality of packets $P_1$, $P_2$, ..., $P_m$ based on the delay times $t_1$, $t_2$, ..., $t_m$.

Further, according to yet another aspect of this invention, there is provided a program for causing a computer to function as: packet generation means for encoding image information to be transmitted to generate a plurality of packets $P_1$, $P_2$, ..., $P_m$, the plurality of packets $P_1$, $P_2$, ..., $P_m$ each corresponding to the image information and having data amounts $q_1$, $q_2$, ..., $q_m$, respectively, that satisfy a relationship of $q_1 < q_2 < ... < q_m$, where m is a natural number of 2 or more; and packet transmission means for transmitting the plurality of packets $P_1$, $P_2$, ..., $P_m$ to a destination packet communication device, which is different from the packet communication device, via a packet communication network. The destination packet communication device is configured to: measure delay times $t_1$, $t_2$, ..., $t_m$ of the plurality of packets $P_1$, $P_2$, ..., $P_m$, respectively; and select any one of the plurality of packets $P_1$, $P_2$, ..., $P_m$ based on the delay times $t_1$, $t_2$, ..., $t_m$.

Further, according to yet another aspect of this invention, there is provided a method of transmitting image information, including, when transmitting image information from a first node to a second node via a packet communication network: a packet generation step of encoding, by the first node, image information to be transmitted to generate a plurality of packets $P_1$, $P_2$, ..., $P_m$, the plurality of packets $P_1$, $P_2$, ..., $P_m$ each corresponding to the image information and having data amounts $q_1$, $q_2$, ..., $q_m$, respectively, that satisfy a relationship of $q_1 < q_2 < ... < q_m$, where m is a natural number of 2 or more; a packet transmission step of transmitting the plurality of packets $P_1$, $P_2$, ..., $P_m$ from the first node to the second node via the packet communication network; a delay time measurement step of measuring, by the second node, delay times $t_1$, $t_2$, ..., $t_m$ of the plurality of packets $P_1$, $P_2$, ..., $P_m$, respectively; and a packet selection step of selecting, by the second node, any one of the plurality of packets $P_1$, $P_2$, ..., $P_m$ based on the delay times $t_1$, $t_2$, ..., $t_m$.

Effect of the Invention

According to one embodiment of this invention, the node on the transmission side transmits the one piece of image information as the plurality of packets having the data amounts that are different from one another, and the node on the reception side selects the packet having the largest data amount from among the packets that have been received without a delay or within the allowable delay time and decodes the image information of the selected packet. Accordingly, it is possible to transmit the image information at a higher bit rate within such a range as to enable the transmission without a delay under the congestion situation of the packet communication network at a given time.

Brief Description of the Drawing

Fig. 1 is a block diagram illustrating an image information transmission system 1 according to one embodiment of this invention.
Fig. 2 is a block diagram of a remote mobile communication system 100 according to a second embodiment of this invention.
Fig. 3 is a block diagram illustrating a configuration of a server machine 110.
Fig. 4 is a block diagram illustrating a configuration of a discrimination unit 185.
Fig. 5 is a block diagram illustrating a configuration of an image encoding unit 186.
Fig. 6 shows characteristics of wavelet transform coefficients obtained when wavelet transform is used as an image encoder.
Fig. 7 is a block diagram illustrating a configuration of client software 171 installed in a portable terminal 170.
Fig. 8 is a block diagram illustrating a configuration of a first packet reception/delay measurement/selection unit 250.

Modes for Embodying the Invention

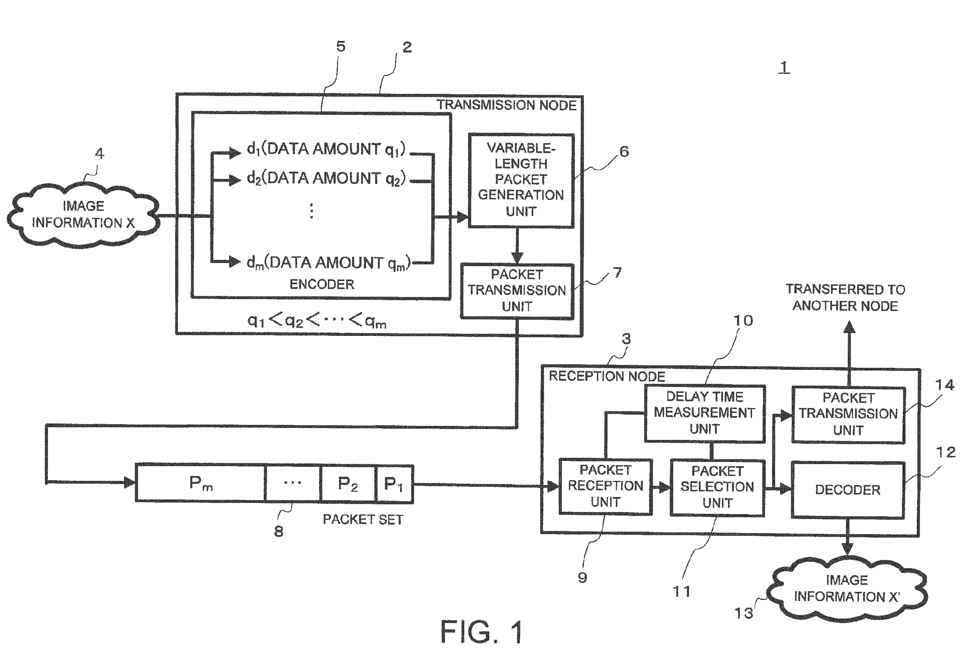

A description is given of an image information transmission system 1 according to a first embodiment of this invention with reference to Fig. 1. The image information transmission system 1 includes a transmission node 2 and a reception node 3.

The transmission node 2 is a packet communication device for encoding and packetizing image information X 4 input thereto and transmitting the resultant image information to the reception node 3 via a packet communication network. Specifically, the transmission node 2 is preferably a wireless communication device for performing packet data communication, such as a mobile phone terminal, but may also be a server machine or a client device installed on a network such as the Internet. The transmission node 2 includes an encoder 5, a variable-length packet generation unit 6, and a packet transmission unit 7.

The encoder 5 encodes the image information X 4, and in encoding the image information X 4, generates a plurality of pieces of data $d_1, d_2, ..., d_m$ (where m is a natural number of 2 or more) corresponding to one piece of image information X 4. When it is assumed in this case that data amounts of the pieces of data $d_1, d_2, ..., d_m$ are represented by data amounts $q_1, q_2, ..., q_m$, respectively, the encoder 5 generates the pieces of data so that a relationship of $q_1<q_2<...<q_m$ holds. For example, in a case where m=4, the encoder 5 encodes the image information X 4 at bit rates of 128 kbps, 256 kbps, 512 kbps, and 1 Mbps to generate pieces of data $d_1, d_2, ..., d_4$, respectively.

The variable-length packet generation unit 6 generates variable-length packets each having a packet length corresponding to the data amount. The variable-length packet generation unit 6 generates packets $P_1, P_2, ..., P_m$ corresponding to the pieces of data $d_1, d_2, ..., d_m$, respectively. The generated packets are variable-length packets, and hence a magnitude relation among data amounts of the packets $P_1, P_2, ..., P_m$ inherits a magnitude relation among the pieces of data $d_1, d_2, ..., d_m$ as it is.

The packet transmission unit 7 transmits the packets $P_1, P_2, ..., P_m$ to the packet communication network in this stated order. The packet transmission unit 7 transmits a packet set 8 that corresponds to the image information X 4 and includes m packets whose data amounts are different from one another to the reception node 3 in ascending order of the data amounts. An order relation of the transmitted packets is illustrated as the packet set 8.

The reception node 3 may also preferably be a server machine or a client device installed on the network such as the Internet. Alternatively, the reception node 3 may also be a wireless communication device for performing packet data communication, such as a mobile phone terminal. In the reception node 3, when a packet reception unit 9 receives the packet set 8, a delay time measurement unit 10 measures a delay time for each packet. The packet transmission unit 7 transmits the packets $P_1, P_2, ..., P_m$ in this stated order, and hence the packet reception unit 8 basically receives the packets $P_1, P_2, ..., P_m$ in this stated order. It is assumed here that delay times of the packets $P_1, P_2, ..., P_m$ are represented by $t_1, t_2, ..., t_m$, respectively. A packet selection unit 11 selects and outputs a packet having the largest data amount from among the packets each having an allowable delay time based on the delay times $t_1, t_2, ..., t_m$ and the data amounts of the corresponding packets.

In general, the delay time on the network of the packet having a smaller data amount is conceivably shorter, and in contrast, the delay time on the network of the packet having a larger data amount is conceivably longer. In view of this point, a conceivable case is where the packet selection unit 11 sequentially determines the delay times of the

packets $P_1$, $P_2$, ..., $P_m$, which have been received in this stated order, and when determining that the delay time of a given packet exceeds an allowable range, selects a packet received immediately before the given packet. In this case, packets received afterwards may be discarded without being subjected to the determination based on their delay times.

For example, when it is assumed that the determination is made based on the delay time $t_3$ of the packet $P_3$ and it is determined that the packet $P_3$ is significantly delayed, the packet selection unit 11 selects the packet $P_2$, which has been received immediately before the packet $P_3$. As described above, the delay time of the packet having a smaller data amount is conceivably shorter. It is thus conceivable that unless a traffic congestion situation suddenly changes, the fact that, within the packet set corresponding to the image information X 4, the packets $P_1$ and $P_2$ received earlier are not detected to be significantly delayed and the packet $P_3$ is detected to be significantly delayed means that the packets $P_4$, $P_5$, ..., $P_m$ to be received afterwards are significantly delayed. In view of this idea, the determination based on the delay time may be omitted for the packet $P_4$ and packets to be received afterwards, or instead, the packets themselves may be discarded.

Further, the packets $P_1$, $P_2$, ..., $P_m$ are transmitted in ascending order of their data amounts, and hence the packet received immediately before the packet determined as being significantly delayed has the largest data amount among the packets that have been received with a small delay. For example, as in the above-mentioned case, it is assumed that m=4 and the pieces of data $d_1$, $d_2$, ..., $d_4$ of the image information X 4 are encoded and packetized at the bit rates of 128 kbps, 256 kbps, 512 kbps, and 1 Mbps, respectively, and then the resultant packets are transmitted. It is then assumed in this case that the packet selection unit 11 determines that when m=3, that is, in the case of the delay time $t_3$ of the packet $P_3$ storing the data $d_3$ encoded at the data rate of 512 kbps, the packet $P_3$ is significantly delayed. At this time, both of the packets $P_1$ and $P_2$ received before the packet $P_3$ have arrived at the reception node 3 without being significantly delayed, and the packet $P_2$, which has been received immediately before the packet $P_3$, has the largest data amount between the packets $P_1$ and $P_2$.

When the packet selection unit 11 selects and outputs any one of the packets included in the packet set 8 based on the delay time in this manner, a decoder 12 decodes data stored in the selected packet and outputs image information X' 13. With this, as compared with a case where only the packet generated at a single data rate is transmitted, the reception node 3 can decode the image information X' 13 based on the data encoded at a larger data rate that is determined depending on the congestion situation of the packet communication network.

Alternatively, the reception node 3 may transfer the packet selected by the packet selection unit 11 to another packet communication device via a packet transmission unit 14. A third node is a general packet communication device here. More specifically, the third node is preferably a wireless communication device for performing packet data communication, such as a mobile phone terminal, but may also be a server machine or a client device installed on the network such as the Internet. The third node does not need to select the packet unlike the second node, and decodes the received packet as it is.

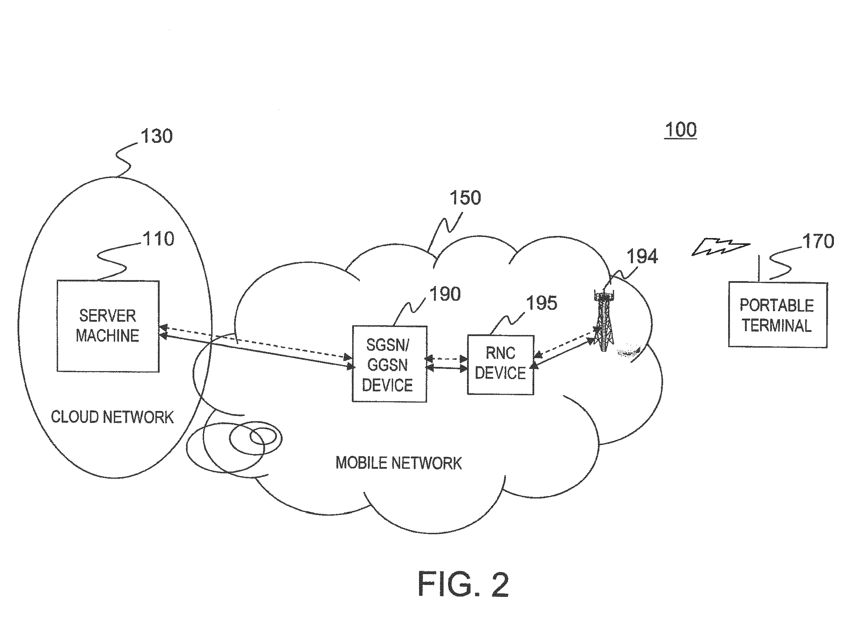

A description is given of a remote mobile communication system 100 according to a second embodiment of this invention with reference to Fig. 2. Referring to Fig. 2, Fig. 2 illustrates an example in which a mobile network 150 is used as a network in the remote mobile communication system 100. Further, Fig. 2 illustrates a configuration adopted in a case where an SGSN/GGSNN device is used as a packet transfer device. The SGSN/GGSN device herein refers to a device formed by integrating a serving GPRS support node (SGSN) device and a gateway GPRS support node (GGSN) device. Further, Fig. 2 illustrates as an example a configuration in which a server machine 110 of a thin client is disposed in a cloud network 130 and the cloud network 130 and the mobile network 150 are connected to each other.

In Fig. 2, an end user connects the portable terminal 170 to a virtual client of the server machine 110 disposed in the cloud network 130 to operate the virtual client as if operating an actual terminal. To implement this, a packet storing an operation signal is transmitted from client software installed in the portable terminal 170 to the server machine 110 via a base station 194, an RNC device 195, and an SGSN/GGSN device 190 on the mobile network 150. The operation signal herein refers to a signal transmitted from the client software of the portable terminal 170 to the server machine 110 through operations performed on the portable terminal 170, such as a key operation, a touch operation on a screen, a character input, and scrolling.

The operation signal packet is transmitted from a packet transmission unit of the client software installed in the portable terminal 170, and arrives at the server machine 110 on the cloud network 130 via the base station 194, the RNC device 195, and the SGSN/GGSN device 190 on the mobile network 150, and the server machine 110 receives the operation signal. A well-known protocol can be used here as a protocol to be used when the operation signal is transmitted, but it is assumed here that TCP/IP and HTTP, which is an upper layer protocol than TCP/IP, are used. Note that, Session Initiation Protocol (SIP) or the like may also be used other than HTTP.

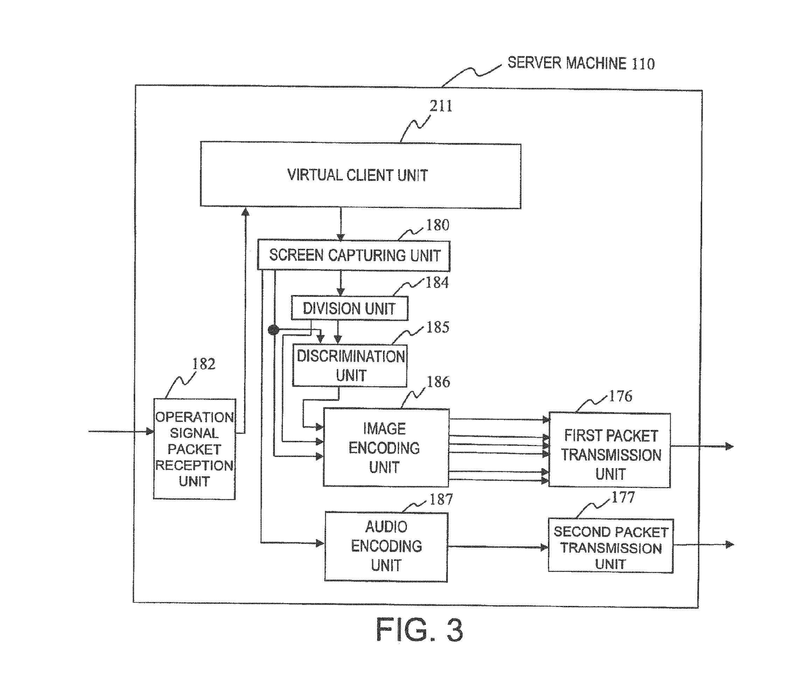

Fig. 3 is a block diagram illustrating a configuration of the server machine 110.

An operation signal packet reception unit 182 receives the packet storing the operation signal from the client software of the portable terminal 170 via the base station 194, the RNC device 195, and the SGSN/GGSN device 190. The operation signal packet reception unit 182 extracts the operation signal from the received operation signal TCP/IP packet and outputs the extracted operation signal to a virtual client unit 211.

The virtual client unit 211 includes application software capable of providing various services, a control unit, a screen generation unit, a cache memory, and others. Further, the virtual client unit 211 has such a configuration that the application software can be updated with ease from the outside of the server machine 110. Note that, the virtual client unit builds a virtualized environment on a host OS, runs a guest OS on the built virtualized environment, and runs the virtual client on the guest OS, which is not shown in Fig. 3. Arbitrary OSes can be used here as the host OS and the guest OS. The virtual client unit 211 analyzes the operation signal input from the operation signal packet reception unit 182 and activates the application software designated by the operation signal. A screen created by the application software is generated at a predetermined screen resolution and the generated screen is output to a screen capturing unit 180.

The screen capturing unit 180 captures and outputs the screen at a predetermined screen resolution and a predetermined frame rate.

The entire screen may be compressed and encoded by an image encoder, or the screen may be divided into a plurality of (2, for example) regions and each of the regions may be compressed and encoded by different image encoders. Described below is an example in which the screen is divided into two types of regions and different image encoders are used for the respective types of regions. It is assumed here that, as an example, the regions include a video region and other regions.

A division unit 184 divides the captured screen into a plurality of blocks each having a predetermined size. It is assumed here that the size of each block is, for example, 16 pixels x 16 lines, but another size such as 8 pixels x 8 lines may also be used. When a smaller block size is used, an accuracy of discrimination by a discrimination unit is enhanced, but a processing amount of the discrimination unit increases. The division unit 184 outputs the blocks obtained by division to a discrimination unit 185.

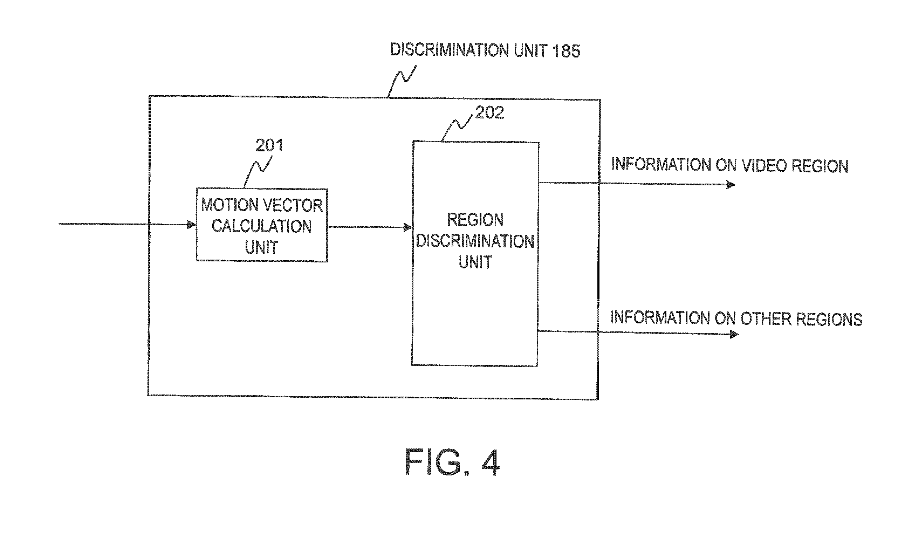

Fig. 4 illustrates a configuration of the discrimination unit 185. In this embodiment, a description is given of a case where the discrimination unit 185 discriminates between two types of regions of the screen. In this case, those two types include a video region and the other regions. Further, it is assumed that a motion vector is used as an image feature amount to be used by the discrimination unit.

In Fig. 4, a motion vector calculation unit 201 calculates, for each block, such a motion vector Vk(dx, dy) as to minimize Dk of the following Expression 1, for example.

$$ Dk = \sum_{i} \sum_{j} \left| f\_n(Xi, Yj) - f\_n-1(Xi + dx, Yj + dy) \right| $$

... (Expression 1)

where f_n_k(Xi, Yj) and f_n_1(Xi, Yj) represent pixels included in a k-th block of an n-th frame and pixels included in a k-th block of an (n-1)th frame, respectively.

The motion vector calculation/discrimination unit 201 next calculates, for each block, a magnitude and direction of the motion vector in accordance with the following Expression 2 and Expression 3, respectively.

$$ Vk = \sqrt{(dx * dx + dy * dy)} \quad \text{... (Expression 2)} $$

$$ \theta k = \arctan\left(\frac{dy}{dx}\right) \quad \text{... (Expression 3)} $$

where Vk represents the magnitude of the motion vector in the k-th block and θk represents the angle (direction) of the motion vector in the k-th block.

Next, a region discrimination unit 202 retrieves Vk and θk for a plurality of consecutive blocks, and when the values of Vk exceed a predetermined threshold value and the values of θk vary in the plurality of consecutive blocks, determines those blocks as the video regions. It is assumed here that a first region means the video region.

Note that, when the values of Vk exceed the threshold value but the values of θk indicate substantially the same angles in the plurality of consecutive blocks, the region discrimination unit 202 does not determine those blocks as the video region and determines those blocks as a movement region, which is caused by screen scrolling or the like.

The region discrimination unit 202 outputs to an image encoding unit 186 of Fig. 3 a discrimination flag indicating whether or not there is a video region and a range of the region when there is a video region. It is assumed here that a region obtained by shaping the blocks into a rectangular region is used as the video region, and that the range of the region includes the number of pixels in a horizontal direction and the number of lines in a vertical direction of the rectangular region and the numbers and sizes of the blocks included in the region.

Next, the region discrimination unit 202 discriminates, as the other regions other than the video region, between, for example, the movement region and a still image region, and outputs a discrimination flag and the range of the region to the image encoder unit 186 of Fig. 3.

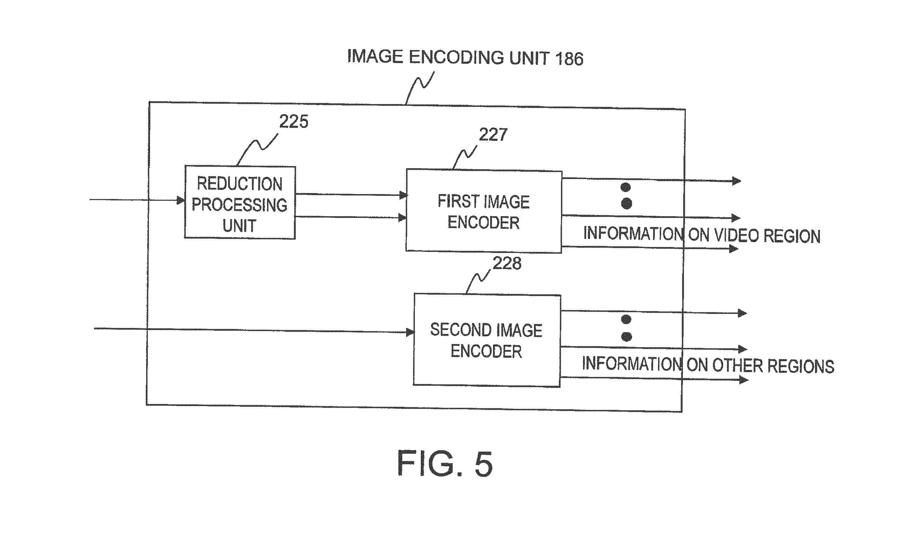

A description is next given of a configuration of the image encoding unit 186 with reference to Fig. 5. In Fig. 5, a reduction processing unit 225 and a second image encoder unit 228 inputs the captured image from the image capturing unit 180, inputs the size of each block for division from the division unit 184, and inputs the discrimination flag, the range of the video region, and the ranges of the other regions (for example, the movement region and the still image region) from the discrimination unit 185.

Next, when there is a video region, the reduction processing unit 225 determines whether or not the number of pixels in the horizontal direction and the number of lines in the vertical direction, that is, the size of the video region exceeds a predetermined size. It is assumed here that the predetermined size is, for example, the QVGA size. When the size of the video region exceeds the QVGA size, the reduction processing unit 225 calculates an image reduction filter to reduce the image included in the video region so that the video region has the QVGA size, and outputs the reduced image to a first image encoder 227. In this case, the reduction processing unit 225 has reduced the size of the first region, and hence the reduction processing unit 225 outputs the size before the reduction to the first image encoder 227 as the range of the video region. When the size of the video region does not exceed the predetermined size, without calculating the image reduction filter, the reduction processing unit 225 outputs the image of the video region to the first image encoder 227 as it is and outputs the size of the video region as well to the first image encoder 227 as it is.

Next, the first image encoder 227 inputs the image signal of the video region and uses a predetermined video encoder to compress and encode the image signal into bit streams having a plurality of bit rates and outputs the bit streams having the plurality of bit rates to a first packet transmission unit 176 of Fig. 3. The following configuration may be adopted for the selection of the plurality of bit rates, for example. Specifically, the plurality of bit rates is selected from among predetermined bit rates based on information such as the image size of the terminal or the type of network to be used, or the above-mentioned information is received from the terminal at the time of initiating a session and is used for the selection. It is assumed here as an example that four types of bit rates are used. Specifically, for example, 128 kbps, 256 kbps, 512 kbps, and 1 Mbps are used. Further, it is assumed that H.264 is used as the predetermined video encoder, but another well-known video codec such as H.264 scalable codec (SVC), MPEG-4, or MPEG-4 scalable codec (SVC) may also be used. When H.264 SVC or MPEG-4 SVC is used, it is possible to reduce a processing amount required for the encoding at the time of encoding at the plurality of bit rates. The first image encoder 227 further outputs information on the video region to the first packet transmission unit 176 of Fig. 3.

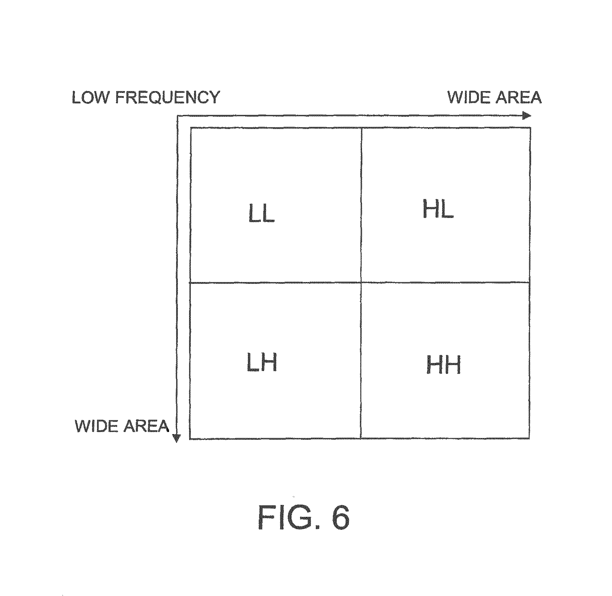

Next, the second image encoder 228 inputs information on the other regions, and in a case of a still image, uses a still image codec to compress and encode the image at a plurality of bit rates and outputs bit streams having the plurality of bit rates to a first packet transmission unit 176 of Fig. 3. It is assumed here that a wavelet encoder or JPEG 2000 is used as the still image codec, but another well-known codec such as JPEG may also be used. Note that, when the wavelet encoder or the JPEG 2000 encoder is used, with the use of the characteristics of wavelet transform used in those encoders, with respect to coefficients obtained after the wavelet transform, as shown in Fig. 6, compressed and encoded bit streams of B1, B2, B3, and B4 are acquired from four types of regions of LL, LH, HL, and HH, respectively, in a range of from a low frequency to a high frequency. With the use of the above-mentioned characteristics, for example, bit streams of B1, B1+B2, B1+B2+B3, and B1+B2+B3+B4 may be output as the bit streams having four types of bit rates from the second image encoder 228. With this configuration, an image quality degradation can be made less conspicuous on the terminal. The second image encoder 228 further outputs the information on the other regions as well to the first packet transmission unit 176 of Fig. 3.

In a case of the movement region, the second image encoder 228 outputs the bit stream obtained by compressing and encoding the image before the movement by the still image codec and one representative type of motion vector to the first packet transmission unit 176 of Fig. 3. The second image encoder 228 further outputs the information on the other regions as well to the first packet transmission unit 176 of Fig. 3.

Next, when the screen is accompanied with audio data, an audio encoding unit 187 of Fig. 3 inputs an audio signal accompanying the screen from the screen capturing unit 180, uses an audio encoder to compress and encode the audio signal, and outputs the resultant audio signal to a second packet transmission unit 177 of Fig. 3. It is assumed here that MPEG-4 AAC is used as the audio encoder, but another well-known audio encoder may also be used.

Referring back to Fig. 3, the first packet transmission unit 176 inputs the region information from the first image encoder 227 and the second image encoder 228 of Fig. 5, and in the case of the video region, the first packet transmission unit 176 inputs the compressed and encoded bit streams having the four types of bit rates from the first image encoder of Fig. 5 and forms four types of packets storing the corresponding bit streams. Specifically, the first packet transmission unit 176 stores the respective pieces of bit stream data in payloads of the packets of a predetermined protocol, arranges the four types of packets in a predetermined order within a predetermined time section, and consecutively transmits the four types of packets at short time intervals to the SGSN/GGSN device 190 of Fig. 2. It is assumed here that the predetermined time interval is an ascending order of the bit rates, and in the above-mentioned example of the bit rates, the order of 128 kbps, 256 kbps, 384 kbps, and 512 kbps.

Next, in the case of the other regions, for example, the first packet transmission unit 176 inputs the bit streams having the four types of bit rates from the second image encoder 228 of Fig. 5 and forms four types of packets. Specifically, the first packet transmission unit 176 stores the respective bit streams in payloads of the packets of a predetermined protocol, arranges the four types of packets in a predetermined order within a predetermined time section, and consecutively transmits the four types of packets at short time intervals to the SGSN/GGSN device 190 of Fig. 2. It is assumed here that the predetermined time interval is an ascending order of the bit rates.

Note that, UDP/IP can be used as the predetermined protocol, for example. A well-known protocol other than UDP/IP, such as RTP/UDP/IP, may also be used. A time section of from several tens of ms to 100 ms may be used as the predetermined time section. A time interval of from several ms to several tens of ms may be used as the short time interval.

Note that, the region information may be stored in an RTP header or a UDP header, or in the payload.

The second packet transmission unit 177 stores the compressed and encoded bit stream obtained by compressing and encoding the audio signal in the payload of the packet, forms the packet of a predetermined protocol, and outputs the packet to the SGSN/GGSN device 190. A well-known protocol such as RTP/UDP/IP, UDP/IP, or TCP/IP is used as the predetermined protocol, but it is assumed here that UDP/IP is used as an example.

The SGSN/GGSN device 190 transfers the packet received from the server machine 110 to the RNC device 195 by tunneling under the GTP-U protocol. The RNC device 195 wirelessly transmits the packet to the portable terminal 170 via the base station 194.

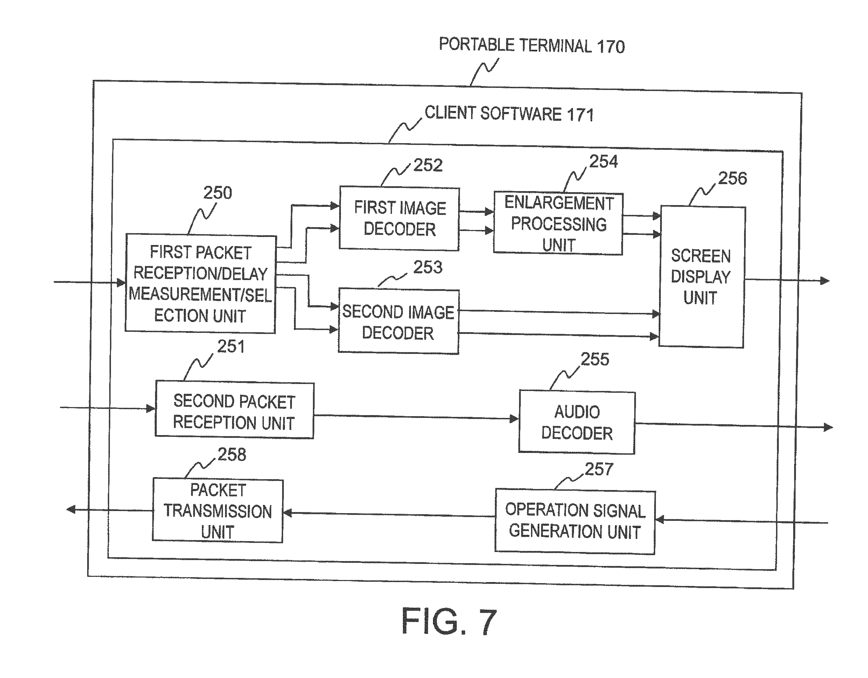

In this invention, client software 171 is installed in the portable terminal 170. The client software 171 is for transmitting to the server the operation signal issued when the user operates the terminal and for receiving the packet from the server and decoding the compressed and encoded stream for display. Fig. 7 illustrates a configuration of the client software 171.

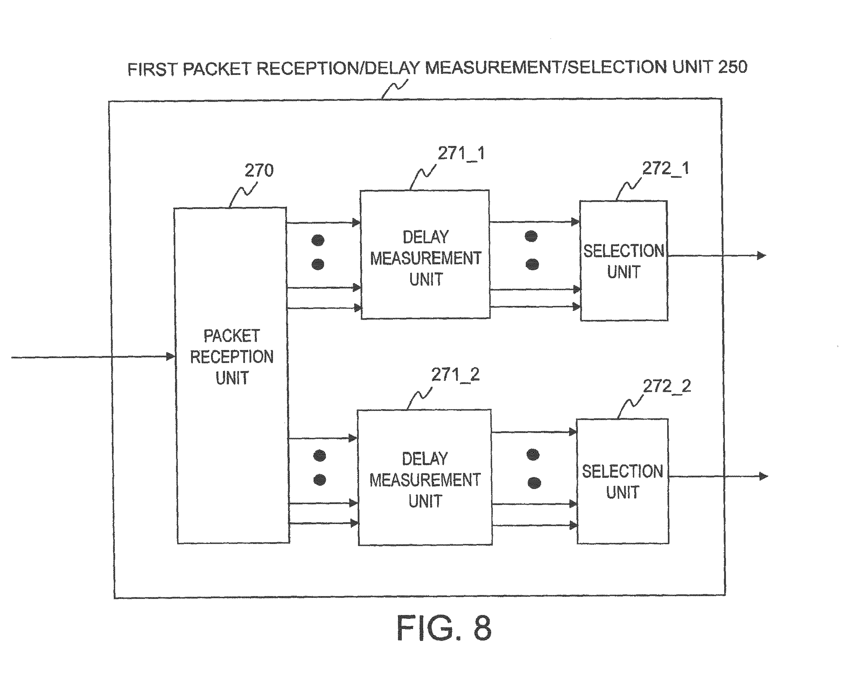

First, Fig. 8 illustrates a configuration of a first packet reception/delay measurement/selection unit 250 of Fig. 7. In Fig. 8, a packet reception unit 270 receives a plurality of consecutive packets for each of the video region and the other regions. The packet reception unit 270 extracts, in the case of the video region, the information on the video region stored in the four types of consecutive packets, which have been received in ascending order of the bit rates, reception time information R(j), and transmission time information S(j) ($1{\leq}j{\leq}4$), extracts the bit stream information from the payloads of the four packets, and outputs those extracted pieces of information to a delay measurement unit 271_1.

The delay measurement unit 271_1 uses S(j) and R(j) of each packet to calculate, for each of the four packets, a delay time D(j) in accordance with the following Expression 4.

$$D(j) = R(j) - S(j) \quad \text{... (Expression 4)}$$

where D(j) represents a delay time of a j-th packet. The delay measurement unit 271_1 outputs to a selection unit 272_1 the calculated delay times D(j), the extracted four types of bit streams, and the information on the video region.

The selection unit 272_1 compares the values of D(j) with one another, and selects the bit stream stored in the packet that has been received immediately before the delay time Dj suddenly increases. When it is assumed that D1=100 ms, D2=120 ms, D3=118 ms, and D4=250 ms, for example, the delay time that suddenly increases is D4 corresponding to the fourth packet, and hence the third packet is the packet that has been received immediately before the delay time suddenly increases. In this example, the selection unit 272_1 thus selects the bit stream stored in the payload of the third packet, that is, the packet having the bit rate of 384 kbps. The selection unit 272_1 then outputs the selected bit stream and the information on the video region to a first image decoder 252 of Fig. 7.

Meanwhile, the first packet reception/delay measurement/selection unit 250 performs similar processing on the other regions. The packet reception unit 270 receives the plurality of consecutive packets for the other regions. The packet reception unit 270 extracts, in the case of the other regions, the information on the other regions stored in the four types of consecutive packets, which have been received in ascending order of the bit rates, reception time information R'(m), and transmission time information S'(m) ($1{\leq}m{\leq}4$), extracts the bit stream information from the payloads of the four packets, and outputs those extracted pieces of information to a delay measurement unit 271_2.

The delay measurement unit 271_2 uses S'(m) and R'(m) of each packet to calculate, for each of the four packets, a delay time D'(m) in accordance with the following Expression 5.

$$D'\left(m\right) = R'\left(m\right) - S'\left(m\right) \quad \text{... (Expression 5)}$$

where D'(m) represents a delay time of an m-th packet. The delay measurement unit 271_2 outputs to a selection unit 272_2 the calculated delay times D'(m), the extracted four types of bit streams, and the information on the other regions.

The selection unit 272_2 compares the values of D'(m) with one another, and selects the bit stream stored in the packet that has been received immediately before the delay time D'(m,) suddenly increases. The selection unit 272_2 then outputs the selected bit stream and the information on the other regions to a second image decoder 253 of Fig. 7.

Referring back to Fig. 7, the first image decoder 252 inputs the information on the video region and the bit stream having the bit rate selected by the first packet reception/delay measurement/selection unit 250, decodes the bit stream, and outputs the decoded bit stream to an enlargement processing unit 254. The first image decoder 252 further outputs the information on the video region as well to the enlargement processing unit 254. It is assumed here as an example that the H.264 decoder is used as the first image decoder, but another well-known image decoder such as the H.264 SVC decoder, MPEG-4 SVC decoder, or MPEG-4 decoder may also be used. It should be understood, however, that a decoder to be used is the same type as the first image encoder 227 of the server.

Next, the enlargement processing unit 254 inputs the image signal obtained after decoding and the information on the video region. The enlargement processing unit 254 first uses the image signal after the decoding to calculate the size of the region of the image signal after the decoding (hereinafter referred to as "A"), and compares A with the size of the video region based on the information on the video region (hereinafter referred to as "B"). When A<B, the enlargement processing unit 254 performs the enlargement processing on the image signal after the decoding by well-known filter calculation so that A matches B, and outputs the image signal having the enlarged size B to a screen display unit 256. Note that, when A matches B, the enlargement processing unit 254 passes the enlargement processing therethrough and outputs the decoded image signal to the screen display unit 256 as it is. The enlargement processing unit 254 further outputs the information on the video region to the screen display unit 256.

The second image decoder 253 inputs the information on the other regions and the bit stream selected by the first packet reception/delay measurement/selection unit 250, decodes the bit streams relating to the other regions, and outputs the decoded bit streams to the screen display unit 256. The second image decoder 253 further outputs the information on the other regions to the screen display unit 256.

The screen display unit 256 inputs the information on the video region and the image signal of the video region from the enlargement processing unit 254, and inputs the information on the other regions and the image signal of the other regions from the second image decoder 253. The screen display unit 256 then uses the information on the first region to display the image output from the enlargement processing unit 254 in the first region, and uses the information on the other regions to display the images output from the second image decoder 253 in the other regions. The screen display unit 256 generates a display screen by combining the image signals of the respective regions in this manner, and outputs the generated display screen.

A second packet reception unit 251 receives the packet, extracts the compressed and encoded bit stream relating to the audio data stored in the packet, and outputs the obtained bit stream to an audio decoder 255.

The audio decoder 255 inputs and decodes the compressed and encoded stream and outputs the decoded stream in synchronization with the image signals of the screen. For example, MPEG-4 AAC can be used as the audio decoder here, but another well-known audio decoder may also be used. It should be understood, however, that an audio decoder to be used is the same type as the audio encoder of the server.

An operation signal generation unit 257 detects operations input to the portable terminal 170 by the user, such as screen touching, screen scrolling, icon touching, and a character input, generates the operation signal for each of the operations, and outputs the generated operation signal to a packet transmission unit 258.

The packet transmission unit 258 inputs the operation signal, stores the operation signal in a packet of a predetermined protocol, and transmits the packet to the network. TCP/IP, UDP/IP, or the like can be used here as the predetermined protocol.

According to this embodiment, the following effect is achieved. When the thin client is used via the network and the screen generated on the server side is compressed and encoded to be transferred to the terminal via the network, the bit streams having the plurality of kinds of bit rates at which those bit streams are to be actually transferred are used to transfer the packetized bit streams from the server. Then, the respective delay times of the packets that have been received on the terminal side are calculated, and the bit stream stored in the packet that is not increased in its delay time is selected and decoded for display. It is therefore possible to use the thin client without an increase in the delay time and the freezing of the screen even in a network having a narrow bandwidth or even when the bandwidth of the network varies.

This invention is described above by way of the embodiments, but this invention is not limited to the embodiments described above.

The types of regions of the screen among which the discrimination unit discriminates may be three or more. Further, an image feature amount other than the motion vector may also be used as the image feature amount to be used for the discrimination among the regions, or a plurality of types of image feature amounts may be combined for use.

Further, in order to reduce the processing amount or the like required for the discrimination processing, the following configuration may also be adopted. Only one type of region is used and the division into the regions and the discrimination among the regions are not performed, and only one type of image encoder and only one type of image decoder are used. When only one type of encoder/decoder is used, a video encoder/decoder or a still image encoder/decoder may be used as the image encoder/decoder.

In Fig. 2, as the mobile network 150, a mobile LTE/EPC network may also be used, or a WiMAX network or a Wi-Fi network may also be used. Further, a fixed network, an NGN, or the Internet may also be used. Note that, in those cases, the network is connected from a fixed terminal or a PC, instead of from the mobile terminal.

In Fig. 2, the server machine is disposed in the cloud network, but may also be disposed in the Internet. Further, when the server of the thin client is disposed in an enterprise, the server machine may also be disposed in an enterprise network. Further, as another configuration, when a telecommunications carrier itself disposes the thin client server, the server machine 110 may also be disposed in the mobile network 150, the fixed network, or the NGN.

Part or whole of the above-mentioned embodiments can also be described as the following supplementary notes. However, the following supplementary notes are not intended to limit this invention.

(Supplementary Note 1)

A packet communication system, including:

a first node; and
a second node,
the first node including:

packet generation means for encoding image information to be transmitted to generate a plurality of packets $P_1$, $P_2$, ..., $P_m$, the plurality of packets $P_1$, $P_2$, ..., $P_m$ mach corresponding to the image information and having data amounts $q_1$, $q_2$, ..., $q_m$, respectively, that satisfy a relationship of $q_1 < q_2 < ... < q_m$, where m is a natural number of 2 or more; and
packet transmission means for transmitting the plurality of packets $P_1$, $P_2$, ..., $P_m$ to the second node, which is different from the first node, via a packet communication network,

the second node including:

delay time measurement means for measuring delay times $t_1$, $t_2$, ..., $t_m$ of the plurality of packets $P_1$, $P_2$, ..., $P_m$, respectively;
packet selection means for selecting any one of the plurality of packets $P_1$, $P_2$, ..., $P_m$ based on the delay times $t_1$, $t_2$, ..., $t_m$; and
decoding means for decoding the image information based on the selected one of the plurality of packets.

(Supplementary Note 2)

A system according to Supplementary Note 1,
in which the packet transmission means transmits the plurality of packets $P_1$, $P_2$, ..., $P_m$ in ascending order of the data amounts, and
in which the packet selection means determines, every time each of the plurality of packets is received, whether or not the each of the plurality of packets is valid based on the delay time of the each of the plurality of packets, and when determining that the each of the plurality of packets is invalid, selects one of the plurality of packets that has been received immediately before the each of the plurality of packets.

(Supplementary Note 3)

A system according to Supplementary Note 1 or 2, in which the system divides one image into a plurality of image regions and transmits one of the plurality of image regions as the image information.

(Supplementary Note 4)

A system according to Supplementary Note 3, in which the system classifies each of the plurality of image regions into any one of a plurality of types of image regions based on an image feature amount relating to the each of the plurality of image regions, and transmits one of the plurality of image regions that has been classified into a predetermined type of image region as the image information.

(Supplementary Note 5)

A packet communication device, including:

packet reception means for encoding image information to be transmitted to receive a plurality of packets $P_1$, $P_2$, ..., $P_m$ via a packet communication network, the plurality of packets $P_1$, $P_2$, ..., $P_m$ each corresponding to the image information and having data amounts $q_1$, $q_2$, ..., $q_m$, respectively, that satisfy a relationship of $q_1<q_2<...<q_m$, where m is a natural number of 2 or more;
delay time measurement means for measuring delay times $t_1$, $t_2$, ..., $t_m$ of the plurality of packets $P_1$, $P_2$, ..., $P_m$, respectively;
packet selection means for selecting any one of the plurality of packets $P_1$, $P_2$, ..., $P_m$ based on the delay times $t_1$, $t_2$, ..., $t_m$; and
decoding means for decoding the image information based on the selected one of the plurality of packets.

(Supplementary Note 6)

A packet communication device according to Supplementary Note 5,
in which the packet reception means receives the plurality of packets $P_1$, $P_2$, ..., $P_m$ in ascending order of the data amounts, and
in which the packet selection means determines, every time each of the plurality of packets is received, whether or not the each of the plurality of packets is valid based on the delay time of the each of the plurality of packets, and when determining that the each of the plurality of packets is invalid, selects one of the plurality of packets that has been received immediately before the each of the plurality of packets.

(Supplementary Note 7)

A packet communication device according to Supplementary Note 5 or 6, in which the packet communication device divides one image into a plurality of image regions and transmits one of the plurality of image regions as the image information.

(Supplementary Note 8)

A packet communication device according to Supplementary Note 7, in which the packet communication device classifies each of the plurality of image regions into any one of a plurality of types of image regions based on an image feature amount relating to the each of the plurality of image regions, and transmits one of the plurality of image regions that has been classified into a predetermined type of image region as the image information.

(Supplementary Note 9)

A packet communication device, including:

packet generation means for encoding image information to be transmitted to generate a plurality of packets $P_1$, $P_2$, ..., $P_m$, the plurality of packets $P_1$, $P_2$, ..., $P_m$ each corresponding to the image information and having data amounts $q_1$, $q_2$, ..., $q_m$, respectively, that satisfy a relationship of $q_1<q_2<...<q_m$, where m is a natural number of 2 or more; and
packet transmission means for transmitting the plurality of packets $P_1$, $P_2$, ..., $P_m$ to a destination packet communication device, which is different from the packet communication device, via a packet communication network,
in which the destination packet communication device is configured to:

measure delay times $t_1$, $t_2$, ..., $t_m$ of the plurality of packets $P_1$, $P_2$, ..., $P_m$, respectively;
select any one of the plurality of packets $P_1$, $P_2$, ..., $P_m$ based on the delay times $t_1$, $t_2$, ..., $t_m$; and

decode the image information based on the selected one of the plurality of packets.

(Supplementary Note 10)

A packet communication device according to Supplementary Note 9,
in which the packet transmission means transmits the plurality of packets $P_1$, $P_2$, ..., $P_m$ in ascending order of the data amounts, and
in which the destination packet communication device determines, every time each of the plurality of packets is received, whether or not the each of the plurality of packets is valid based on the delay time of the each of the plurality of packets, and when determining that the each of the plurality of packets is invalid, selects one of the plurality of packets that has been received immediately before the each of the plurality of packets.

(Supplementary Note 11)

A packet communication device according to Supplementary Note 9 or 10, in which the packet communication device divides one image into a plurality of image regions and transmits one of the plurality of image regions as the image information.

(Supplementary Note 12)

A packet communication device according to Supplementary Note 11, in which the packet communication device classifies each of the plurality of image regions into any one of a plurality of types of image regions based on an image feature amount relating to the each of the plurality of image regions, and transmits one of the plurality of image regions that has been classified into a predetermined type of image region as the image information.

(Supplementary Note 13)

A program for causing a computer to function as:

packet reception means for encoding image information to be transmitted to receive a plurality of packets $P_1$, $P_2$, ..., $P_m$ via packet communication network, the plurality of packets $P_1$, $P_2$, ..., $P_m$ each corresponding to the image information and having data amounts $q_1$, $q_2$, ..., $q_m$, respectively, that satisfy a relationship of $q_1 < q_2 < ... < q_m$, where m is a natural number of 2 or more;
delay time measurement means for measuring delay times $t_1$, $t_2$, ..., $t_m$ of the plurality of packets $P_1$, $P_2$, ..., $P_m$, respectively;
packet selection means for selecting any one of the plurality of packets $P_1$, $P_2$, ..., $P_m$ based on the delay times $t_1$, $t_2$, ..., $t_m$; and
decoding means for decoding the image information based on the selected one of the plurality of packets.

(Supplementary Note 14)

A program according to Supplementary Note 13,
in which the packet reception means receives the plurality of packets $P_1$, $P_2$, ..., $P_m$ in ascending order of the data amounts, and
in which the packet selection means determines, every time each of the plurality of packets is received, whether or not the each of the plurality of packets is valid based on the delay time of the each of the plurality of packets, and when determining that the each of the plurality of packets is invalid, selects one of the plurality of packets that has been received immediately before the each of the plurality of packets.

(Supplementary Note 15)

A program according to Supplementary Note 13 or 14, in which the program divides one image into a plurality of image regions and transmits one of the plurality of image regions as the image information.

(Supplementary Note 16)

A program according to Supplementary Note 15, in which the program classifies each of the plurality of image regions into any one of a plurality of types of image regions based on an image feature amount relating to the each of the plurality of image regions, and transmits one of the plurality of image regions that has been classified into a predetermined type of image region as the image information.

(Supplementary Note 17)

A program for causing a computer to function as:

packet generation means for encoding image information to be transmitted to generate a plurality of packets $P_1$, $P_2$, ..., $P_m$, the plurality of packets $P_1$, $P_2$, ..., $P_m$ each corresponding to the image information and having data amounts $q_1$, $q_2$, ..., $q_m$, respectively, that satisfy a relationship of $q_1<q_2<...<q_m$, where m is a natural number of 2 or more; and

packet transmission means for transmitting the plurality of packets $P_1$, $P_2$, ..., $P_m$ to a destination packet communication device, which is different from the packet communication device, via a packet communication network, in which the destination packet communication device is configured to:

measure delay times $t_1$, $t_2$, ..., $t_m$ of the plurality of packets $P_1$, $P_2$, ..., $P_m$, respectively;

select any one of the plurality of packets $P_1$, $P_2$, ..., $P_m$ based on the delay times $t_1$, $t_2$, ..., $t_m$; and

decode the image information based on the selected one of the plurality of packets.

(Supplementary Note 18)

A program according to Supplementary Note 17,

in which the packet transmission means transmits the plurality of packets $P_1$, $P_2$, ..., $P_m$ in ascending order of the data amounts, and

in which the destination packet communication device determines, every time each of the plurality of packets is received, whether or not the each of the plurality of packets is valid based on the delay time of the each of the plurality of packets, and when determining that the each of the plurality of packets is invalid, selects one of the plurality of packets that has been received immediately before the each of the plurality of packets.

(Supplementary Note 19)

A program according to Supplementary Note 17 or 18, in which the program divides one image into a plurality of image regions and transmits one of the plurality of image regions as the image information.

(Supplementary Note 20)

A program according to Supplementary Note 19, in which the program classifies each of the plurality of image regions into any one of a plurality of types of image regions based on an image feature amount relating to the each of the plurality of image regions, and transmits one of the plurality of image regions that has been classified into a predetermined type of image region as the image information.

(Supplementary Note 21)

A method of transmitting image information, including, when transmitting image information from a first node to a second node via a packet communication network:

a packet generation step of encoding, by the first node, image information to be transmitted to generate a plurality of packets $P_1$, $P_2$, ..., $P_m$, the plurality of packets $P_1$, $P_2$, ..., $P_m$ each corresponding to the image information and having data amounts $q_1$, $q_2$, ..., $q_m$, respectively, that satisfy a relationship of $q_1<q_2<...<q_m$, where m is a natural number of 2 or more;

a packet transmission step of transmitting the plurality of packets $P_1$, $P_2$, ..., $P_m$ from the first node to the second node via the packet communication network;

a delay time measurement step of measuring, by the second node, delay times $t_1$, $t_2$, ..., $t_m$ of the plurality of packets $P_1$, $P_2$, ..., $P_m$, respectively;

a packet selection step of selecting, by the second node, any one of the plurality of packets $P_1$, $P_2$, ..., $P_m$ based on the delay times $t_1$, $t_2$, ..., $t_m$; and

a decoding step of decoding the image information based on the selected one of the plurality of packets.

(Supplementary Note 22)

A method according to Supplementary Note 21,
in which the packet transmission step includes transmitting the plurality of packets $P_1$, $P_2$, ..., $P_m$ in ascending order of the data amounts, and
in which the packet selection step includes determining, every time each of the plurality of packets is received, whether or not the each of the plurality of packets is valid based on the delay time of the each of the plurality of packets, and when determining that the each of the plurality of packets is invalid, selecting one of the plurality of packets that has been received immediately before the each of the plurality of packets.

(Supplementary Note 23)

A method according to Supplementary Note 21 or 22, further including dividing one image into a plurality of image regions and transmitting one of the plurality of image regions as the image information.

(Supplementary Note 24)

A method according to Supplementary Note 23, further including classifying each of the plurality of image regions into any one of a plurality of types of image regions based on an image feature amount relating to the each of the plurality of image regions, and transmitting one of the plurality of image regions that has been classified into a predetermined type of image region as the image information.
This application is based on and claims the benefit of priority from Japanese Patent Application No. 2012-214170, filed on September 27, 2012, the disclosure of which is incorporated herein in its entirety.

**Claims**

1. A packet communication system, comprising:

   a first node; and
   a second node,
   the first node comprising:

   packet generation means for encoding image information to be transmitted to generate a plurality of packets $P_1$, $P_2$, ..., $P_m$, the plurality of packets $P_1$, $P_2$, ..., $P_m$ each corresponding to the image information and having data amounts $q_1$, respectively, that satisfy a relationship of $q_1<q_2<...<q_m$, where m is a natural number of 2 or more; and
   packet transmission means for transmitting the plurality of packets $P_1$, $P_2$, ..., $P_m$ to the second node, which is different from the first node, via a packet communication network,

   the second node comprising:

   delay time measurement means for measuring delay times $t_1$, $t_2$, ..., $t_m$ of the plurality of packets $P_1$, $P_2$, ..., $P_m$, respectively;
   packet selection means for selecting any one of the plurality of packets $P_1$, $P_2$, ..., $P_m$ based on the delay times $t_1$, $t_2$, ..., $t_m$; and
   decoding means for decoding the image information based on the selected one of the plurality of packets.

2. A system according to claim 1,
   wherein the packet transmission means transmits the plurality of packets $P_1$, $P_2$, ..., $P_m$ in ascending order of the data amounts, and
   wherein the packet selection means determines, every time each of the plurality of packets is received, whether or not the each of the plurality of packets is valid based on the delay time of the each of the plurality of packets, and when determining that the each of the plurality of packets is invalid, selects one of the plurality of packets that has been received immediately before the each of the plurality of packets.

3. A system according to claim 1 or 2, wherein the system divides one image into a plurality of image regions and transmits one of the plurality of image regions as the image information.

4. A system according to claim 3, wherein the system classifies each of the plurality of image regions into any one of a plurality of types of image regions based on an image feature amount relating to the each of the plurality of image regions, and transmits one of the plurality of image regions that has been classified into a predetennined type of image region as the image information.

5. A packet communication device, comprising:

   packet reception means for encoding image information to be transmitted to receive a plurality of packets $P_1$, $P_2$, ..., $P_m$ via a packet communication network, the plurality of packets $P_1$, $P_2$, ..., $P_m$ each corresponding to the image information and having data amounts $q_1$, $q_2$, ..., $q_m$, respectively, that satisfy a relationship of $q_1 < q_2 < ... < q_m$, where m is a natural number of 2 or more;
   delay time measurement means for measuring delay times $t_1$, $t_2$, ..., $t_m$ of the plurality of packets $P_1$, $P_2$, ..., $P_m$, respectively;
   packet selection means for selecting any one of the plurality of packets $P_1$, $P_2$, ..., $P_m$ based on the delay times $t_1$, $t_2$, ..., $t_m$; and
   decoding means for decoding the image information based on the selected one of the plurality of packets.

6. A packet communication device according to claim 5,
   wherein the packet reception means receives the plurality of packets $P_1$, $P_2$, ..., $P_m$ in ascending order of the data amounts, and
   wherein the packet selection means determines, every time each of the plurality of packets is received, whether or not the each of the plurality of packets is valid based on the delay time of the each of the plurality of packets, and when determining that the each of the plurality of packets is invalid, selects one of the plurality of packets that has been received immediately before the each of the plurality of packets.

7. A packet communication device, comprising:

   packet generation means for encoding image information to be transmitted to generate a plurality of packets $P_1$, $P_2$, ..., $P_m$, the plurality of packets $P_1$, $P_2$, ..., $P_m$ each corresponding to the image information and having data amounts $q_1$, $q_2$, ..., $q_m$, respectively, that satisfy a relationship of $q_1 < q_2 < ... < q_m$, where m is a natural number of 2 or more; and
   packet transmission means for transmitting the plurality of packets $P_1$, $P_2$, ..., $P_m$ to a destination packet communication device, which is different from the packet communication device, via a packet communication network,
   wherein the destination packet communication device is configured to:

   measure delay times $t_1$, $t_2$, ..., $t_m$ of the plurality of packets $P_1$, $P_2$, ..., $P_m$, respectively;
   select any one of the plurality of packets $P_1$, $P_2$, ..., $P_m$ based on the delay times $t_1$, $t_2$, ..., $t_m$; and
   decode the image information based on the selected one of the plurality of packets.

8. A program for causing a computer to function as:

   packet reception means for encoding image information to be transmitted to receive a plurality of packets $P_1$, $P_2$, .., $P_m$ via a packet communication network, the plurality of packets $P_1$, $P_2$, ..., $P_m$ each corresponding to the image information and having data amounts $q_1$, $q_2$, ..., $q_m$, respectively, that satisfy a relationship of $q_1 < q_2 < ... < q_m$, where m is a natural number of 2 or more;
   delay time measurement means for measuring delay times $t_1$, $t_2$, ..., $t_m$ of the plurality of packets $P_1$, $P_2$, ..., $P_m$, respectively;
   packet selection means for selecting any one of the plurality of packets $P_1$, $P_2$, ..., $P_m$ based on the delay times $t_1$, $t_2$, ..., $t_m$; and
   decoding means for decoding the image information based on the selected one of the plurality of packets.

9. A program for causing a computer to function as:

   packet generation means for encoding image information to be transmitted to generate a plurality of packets $P_1$, $P_2$, ..., $P_m$, the plurality of packets $P_1$, $P_2$, ..., $P_m$ each corresponding to the image information and having data amounts $q_1$, $q_2$, ..., $q_m$, respectively, that satisfy a relationship of $q_1 < q_2 < ... < q_m$, where m is a natural number of 2 or more; and

packet transmission means for transmitting the plurality of packets $P_1$, $P_2$, ..., $P_m$ to a destination packet communication device, which is different from the packet communication device, via a packet communication network,

wherein the destination packet communication device is configured to:

measure delay times $t_1$, $t_2$, ..., $t_m$ of the plurality of packets $P_1$, $P_2$, ..., $P_m$, respectively;
select any one of the plurality of packets $P_1$, $P_2$, ..., $P_m$ based on the delay times $t_1$, $t_2$, ..., $t_m$; and
decode the image information based on the selected one of the plurality of packets.

10. A method of transmitting image information, comprising, when transmitting image information from a first node to a second node via a packet communication network:

a packet generation step of encoding, by the first node, image information to be transmitted to generate a plurality of packets $P_1$, $P_2$, ..., $P_m$, the plurality of packets $P_1$, $P_2$, ..., $P_m$ each corresponding to the image information and having data amounts $q_1$, $q_2$, ..., $q_m$, respectively, that satisfy a relationship of $q_1 < q_2 < ... < q_m$, where m is a natural number of 2 or more;
a packet transmission step of transmitting the plurality of packets $P_1$, $P_2$, ..., $P_m$ from the first node to the second node via the packet communication network;
a delay time measurement step of measuring, by the second node, delay times $t_1$, $t_2$, ..., $t_m$ of the plurality of packets $P_1$, $P_2$, ..., $P_m$, respectively;
a packet selection step of selecting, by the second node, any one of the plurality of packets $P_1$, $P_2$, ..., $P_m$ based on the delay times $t_1$, $t_2$, ..., $t_m$; and
a decoding step of decoding the image information based on the selected one of the plurality of packets.

FIG. 1

FIG. 2

EP 2 903 223 A1

SERVER MACHINE 110

211

VIRTUAL CLIENT UNIT

180

SCREEN CAPTURING UNIT

184

DIVISION UNIT

185

DISCRIMINATION UNIT

182

OPERATION SIGNAL PACKET RECEPTION UNIT

186

IMAGE ENCODING UNIT

176

FIRST PACKET TRANSMISSION UNIT

187

AUDIO ENCODING UNIT

177

SECOND PACKET TRANSMISSION UNIT

FIG. 3

DISCRIMINATION UNIT 185

201 MOTION VECTOR CALCULATION UNIT

202 REGION DISCRIMINATION UNIT

INFORMATION ON VIDEO REGION

INFORMATION ON OTHER REGIONS

FIG. 4

IMAGE ENCODING UNIT 186

225

REDUCTION
PROCESSING
UNIT

227

FIRST IMAGE
ENCODER

INFORMATION ON VIDEO REGION

228

SECOND IMAGE
ENCODER

INFORMATION ON OTHER REGIONS

FIG. 5

LOW FREQUENCY                                        WIDE AREA

| LL | HL |
|----|----|
| LH | HH |

WIDE AREA

FIG. 6

PORTABLE TERMINAL 170

CLIENT SOFTWARE 171

FIRST PACKET RECEPTION/DELAY MEASUREMENT/SELECTION UNIT 250

FIRST IMAGE DECODER 252

ENLARGEMENT PROCESSING UNIT 254

SCREEN DISPLAY UNIT 256

SECOND IMAGE DECODER 253

SECOND PACKET RECEPTION UNIT 251

AUDIO DECODER 255

PACKET TRANSMISSION UNIT 258

OPERATION SIGNAL GENERATION UNIT 257

FIG. 7

EP 2 903 223 A1

FIRST PACKET RECEPTION/DELAY MEASUREMENT/SELECTION UNIT 250

FIG. 8

EP 2 903 223 A1

## INTERNATIONAL SEARCH REPORT

| International application No. |
| --- |
| PCT/JP2013/074443 |

A. CLASSIFICATION OF SUBJECT MATTER
*H04L12/811*(2013.01)i, *H04L12/70*(2013.01)i

According to International Patent Classification (IPC) or to both national classification and IPC

B. FIELDS SEARCHED

Minimum documentation searched (classification system followed by classification symbols)
H04L12/811, H04L12/70

Documentation searched other than minimum documentation to the extent that such documents are included in the fields searched
| Jitsuyo Shinan Koho | 1922–1996 | Jitsuyo Shinan Toroku Koho | 1996–2013 |
| Kokai Jitsuyo Shinan Koho | 1971–2013 | Toroku Jitsuyo Shinan Koho | 1994–2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2008-099261 A (Yamaha Corp.), 24 April 2008 (24.04.2008), paragraphs [0030] to [0035] & US 2010/0020682 A1 & EP 2071756 A1 & WO 2008/032747 A1 & CN 101517948 A | 1-10 |
| A | JP 2011-135207 A (NEC Corp.), 07 July 2011 (07.07.2011), paragraphs [0041] to [0055] (Family: none) | 1-10 |
| A | JP 2011-142622 A (NEC Corp.), 21 July 2011 (21.07.2011), paragraphs [0050] to [0056] (Family: none) | 1-10 |

| ☒ | Further documents are listed in the continuation of Box C. | ☐ | See patent family annex. |

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| 02 December, 2013 (02.12.13) | 17 December, 2013 (17.12.13) |

| Name and mailing address of the ISA/ Japanese Patent Office | Authorized officer |
| --- | --- |
| Facsimile No. | Telephone No. |

Form PCT/ISA/210 (second sheet) (July 2009)

**INTERNATIONAL SEARCH REPORT**

International application No.

PCT/JP2013/074443

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2011/132783 A1 (NEC Corp.),<br>27 October 2011 (27.10.2011),<br>paragraphs [0041] to [0044]<br>& US 2013/0034012 A1    & EP 2562972 A1 | 1-10 |
| A | JP 2002-135322 A (NEC Corp.),<br>10 May 2002 (10.05.2002),<br>paragraphs [0026] to [0035]; fig. 2<br>(Family: none) | 1-10 |
| A | US 2004/0267503 A1 (Batterberry et al.),<br>30 December 2004 (30.12.2004),<br>paragraphs [0100] to [0112]<br>& US 2006/0168295 A1 | 1-10 |
| A | US 2004/0240390 A1 (Vidiator Enterprises Inc.),<br>02 December 2004 (02.12.2004),<br>abstract<br>& WO 2005/002156 A1 | 1-10 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011193357 A
- JP 2012214170 A